# EUROPEAN PATENT SPECIFICATION

(11) **EP 1 892 920 B1**
(45) Date of publication and mention of the grant of the patent: **08.01.2014**
(21) Application number: 07015800.1
(22) Date of filing: 10.08.2007
(51) Int. Cl.: H04L 12/24, H04L 12/26, H04L 29/06, H04M 7/00, H04M 3/32

(54) **Monitoring system and method for trunk gateway**
Überwachungssystem und Verfahren für ein Trunk-Gateway
Système et procédé de surveillance pour passerelle de tronc

(30) Priority: 24.08.2006 KR 20060080419
(43) Date of publication of application: 27.02.2008
(73) Proprietor: Innowireless Co., Ltd., Gyeonggi-do 463-400 (KR)
(72) Inventor: Joung, Jinsoup, Seongnam-city, Gyonggi-do 463-802 (KR); Kim, Yeonsong, Dongjak-gu, Seoul 156-766 (KR); Yoo, Daesung, Giheung-gu, Yongin-city, Gyeonggi-do 446-902 (KR)
(74) Representative: Winter, Brandl, Fürniss, Hübner, Röss, Kaiser, Polte - Partnerschaft

(56) References cited:
- WO-A-02/096183
- US-A1- 2004 179 515
- US-B1- 6 370 120

## Description

### BACKGROUND OF THE INVENTION

### Field of the Invention

The present invention relates, in general, to a monitoring system and method for a trunk gateway and, more particularly, to a monitoring system and method for a trunk gateway, which periodically monitor the service status of each channel of the trunk gateway, which operates between an IP network and a PSTN.

### Description of the Related Art

As is well known to those skilled in the art, an Internet protocol phone (hereinafter referred to as an 'IP phone') is a phone that uses technology for transmitting voice over the Internet, that is, the Internet based on packet switching (IP network), rather than a Public Switched Telephone Network (PSTN) based on circuit switching, as in the case of a typical telephone system. Further, IP phones can be classified into a Voice over Internet Protocol (VoIP) phone and a Wireless Fidelity (Wi-Fi) phone depending on whether they are connected in a wired or wireless manner. For such an IP phone, it is predicted that the use thereof will rapidly increase in the future due to the reduction in the amount of network equipment investment caused by the integration of a telephone network with a data network, the reduction of management costs and the improvement of efficiency caused by the construction of an integrated network, or the facilitation of integration with Internet-based multimedia services (for example, video conferencing, etc.). Meanwhile, since the Internet phone uses a dynamic line, unlike a PSTN, which uses a dedicated line, there is a probability that the loss of a great number of packets and delay will occur according to the network traffic of the Internet, so that Quality of Service (QoS) is decreased compared to the PSTN, and thus the precise measurement of service quality is urgently required.

Meanwhile, a trunk gateway, which is equipment that operates between the Internet (IP network) and the PSTN, is important equipment for performing the function of packetizing the Time Division Multiplexing (TDM) trunk line signal of a Private Branch Exchange (PBX) into packets and transmitting the packets over the Internet, or performing the reverse procedure, that is, the function of transmitting media between the IP phone and an existing circuit network telephone. A single trunk gateway can support multiple channels, for example, 32 channels.

Therefore, when the trunk gateway cannot be smoothly operated, a problem may occur in that media are inevitably transmitted only in one direction even if call connection is established, so that there is a need to periodically monitor the service status of each channel of the trunk gateway. However, in the prior art, no system capable of monitoring channel status has been constructed.

Document US 2004/0179515 A1 describes a method of connecting a telephone call through one of a plurality of networks where one of the plurality of networks is an internet protocol network. A first factor for an acceptable quality of service level is received from a user. A second factor responsive to the quality of service for the internet protocol network is determined. The telephone call is connected through the internet protocol network if the second factor is greater than the first factor, otherwise, the telephone call is connected through one of the plurality of networks other than the internet protocol network.

Document WO 02/096181 A2 describes a method and apparatus for determining what level of performance must be maintained by a second communication service so as to be perceived as being of equal quality to a first communication service, especially where the second communication service is subject to additional impairments not experienced by the first communication service. It is determined, what combinations of packet loss rate and packet delay are tolerable where a packet switched telephony service is desired to be perceived to be substantially equivalent to a traditional toll-quality non-packet-switched telephone service. Empirically derived models are used to relate user perception to objectively measurable characteristics such as packet loss rate.

Accordingly, the present invention has been made keeping in mind the above problems occurring in the prior art, and an object of the present invention is to provide a monitoring system and method for a trunk gateway, which periodically monitor the service status of each channel of the trunk gateway that operates between an IP network and a PSTN, thus contributing to the improvement of the performance of a VoIP service system.

The object is solved by the features of the independent claims. The dependent claims are directed to preferred embodiments of the invention.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a network configuration view showing a monitoring system for a trunk gateway according to the present invention; and
FIG. 2 is a flowchart showing a monitoring method for a trunk gateway according to the present invention.

### DESCRIPTION OF THE PREFERRED EMBODIMENTS

Hereinafter, a monitoring system and method for a trunk gateway according to embodiments of the present invention will be described in detail with reference to the attached drawings.

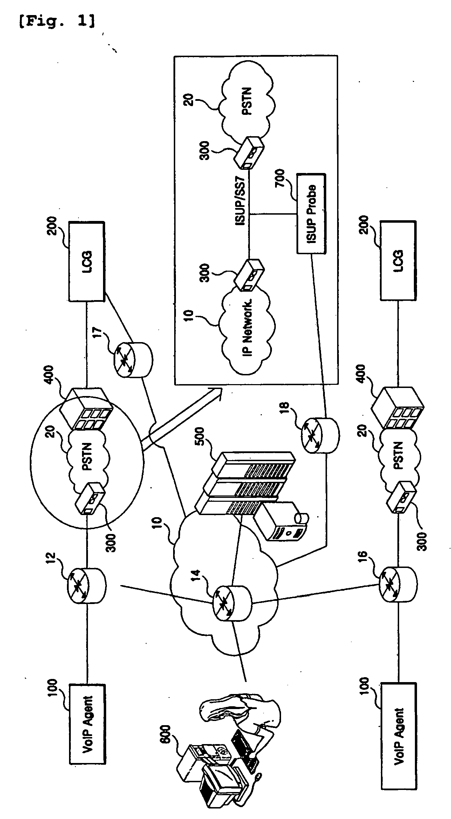

FIG. 1 is a network configuration view showing a monitoring system for a trunk gateway according to the present invention. The monitoring system for a trunk gateway according to the present invention includes trunk gateways 300, Voice over Internet Protocol (VoIP) agents 100, circuit network agents 200, a center server 500, a manager PC 600, and an Integrated Services digital network (IDSN) User Part (ISUP) probe 700. Each trunk gateway 300 is interposed between the Internet 10 and a PSTN 20 and is adapted to packetize the trunk line of a Private Branch Exchange (PBX) 400 into packets and to transmit the packets to the Internet 10, or to perform the reverse procedure. Each VoIP agent 100 is one-end terminal equipment connected to the Internet 10 via a router 12 or 16 and adapted to measure trunk gateway service quality. Each circuit network agent (also indicated by a 'Land Call Generator: LCG' in the drawing) 200, is other-end terminal equipment connected to the PSTN 20 via the PBX 400 and adapted to measure trunk gateway service quality. The center server 500 is connected to the Internet 10 and is adapted to perform various types of control operations related to the measurement of the service quality of the trunk gateway 300, such as the establishment and termination of a call between the VoIP agent 100 and the circuit network agent 200, which are the terminal equipment, and to collect the resultant data of the control operations. The manager PC 600 sets various types of threshold values required for the measurement of the service quality of the trunk gateway, or test scenarios in the center server 500, and receives the results of the setting process. The ISUP probe 700 analyzes packets on the ISUP node of the trunk gateway 300 and thus extracts a Carrier Identification Code (CIC) value.

In the above construction, the VoIP agent 100 functions to originate and terminate a VoIP call using a Session Initiation Protocol (SIP) and an H.323 protocol, which are two types of protocols for VoIP call control and signaling, under the control of the center server 500, to generate a Mean Opinion Score (MOS) value using received voice files, and to additionally analyze a Real-time Transport Protocol (RTP) packet. For this function, the VoIP agent 100 has software installed therein, such as one or more voice files, which are transmitted to the circuit network agent 200 and are used for MOS measurement, MOS calculation algorithms, and various types of scenario programs for MOS measurement, and also has hardware installed therein, such as a telephone circuit unit, a network interface card, and a microprocessor for collectively controlling these components. The telephone circuit unit can be omitted by adopting a structure in which a wired telephone is directly connected to the outside of the system.

Next, the circuit network agent 200 is connected to the PBX 400, and functions to originate and terminate a call under the control of the center server 500, and to calculate a MOS value using received voice files. In order to perform this function, the circuit network agent 200 has software installed therein, such as one or more voice files, which are transmitted to the VoIP agent 100 and are used for MOS measurement, MOS calculation algorithms, and various types of scenario programs for MOS measurement, and also has hardware installed therein, such as a telephone circuit unit, a network interface card, and a microprocessor for collectively controlling these components. The telephone circuit unit can be omitted by adopting a structure in which a wired telephone is directly connected to the outside of the system, as in the case of the VoIP agent 100. The VoIP agent 100 and the circuit network agent 200 must be installed to provide services through the trunk gateway 300 to be monitored.

The center server 500 functions to control the establishment and termination of a call between the terminal equipment, that is, the VoIP agent 100 and the circuit network agent 200, to store the data measured by them in its own database, to analyze the stored data, and to notify the manager PC 600 that a measured MOS value exceeds various types of threshold values set by the manager PC 600 when the MOS value exceeds the threshold values.

The manager PC 600 functions to remotely set in the center server 500 various test scenarios required for the establishment of a call between the VoIP agent 100 and the circuit network agent 200, which are terminal equipment, and the measurement of the service quality therebetween, in order to monitor the trunk gateway 300, to analyze the service status of the trunk gateway 300 using the measured MOS value and RTP session information, and to set a threshold value in the center server 500 so as to apply the threshold value to the measured data and indicate that the measured data is less than the threshold value when the measured data is less than the threshold value. Further, the manager PC 600 can be implemented using an arbitrary PC connected to the Internet 10 and assigned the account of a manager.

First, the ISUP probe 700 functions to analyze the packet on the ISUP node of the trunk gateway 300 and extract a CIC value from the packet, thus providing information required to identify each channel of the trunk gateway 300 to the center server 500. For this function, the ISUP probe 700 includes therein a network interface card capable of communicating with the center server 500 over the Internet. The term 'ISUP' means an ISDN user part, which is one of the components of a Signaling System No. 7 (SS7) protocol, and defines signaling functions, such as line interface control, which is the basis of communication, line monitoring control, and additional service control related to line interfacing.

Meanwhile, the Mean Opinion Score (MOS), which is a speech quality measurement method, is a subjective audio quality measurement method of giving satisfaction levels, decided by users, as scores after making the users listen to actual speech sounds, and thereafter obtaining the average of the scores, thus evaluating speech quality as one of five grades, as shown in the following Table 1.

**Table 1**

| MOS value | Quality grade |
|---|---|
| 5 | Excellent |
| 4 | Good |
| 3 | Fair |
| 2 | Poor |
| 1 | Bad |

As described above, since the MOS measurement method is a method based on the users' subjective assessment, it not only has low objectivity, but also has high measurement costs, and thus automated and objective methods have recently been favored. In detail, there are Perceptual Speech Quality Measurement (PSQM), defined in ITU-T Recommendation P.861, and Perceptual Evaluation of Speech Quality (PESQ), which is the algorithm defined in P.862 on the basis of PSQM to cope with packet loss, etc.

Reference numerals 14, 17, and 18, not described, denote routers located on the Internet 10.

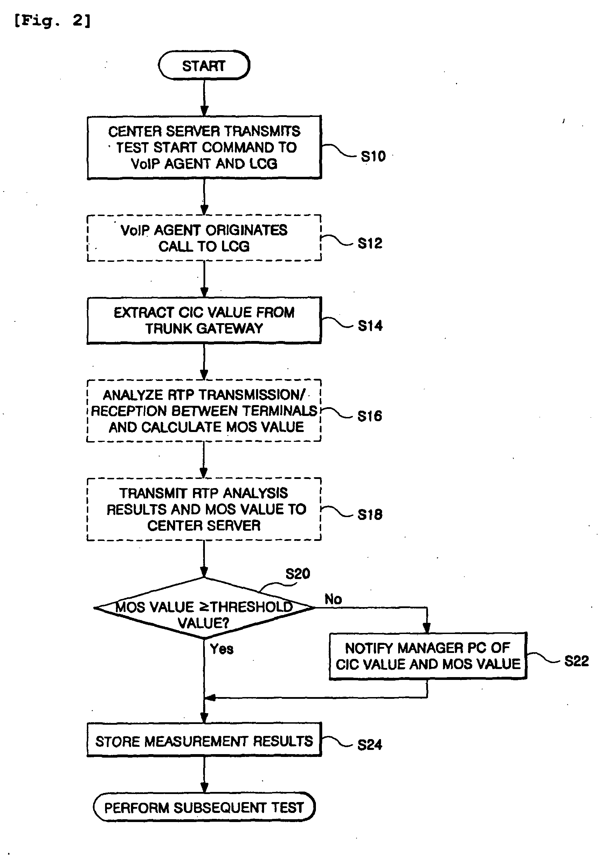

FIG. 2 is a flowchart showing a monitoring method for a trunk gateway according to the present invention. It is noted that steps other than the steps indicated by dotted boxes are performed by the center server 500. The monitoring method for the trunk gateway according to the present invention can be performed in such a way that the service quality between the VoIP agent 100 and the circuit network agent 200, which are installed to be connected through the trunk gateway 300 to be monitored, is measured, and thus the status of the trunk gateway 300 is measured. This procedure is described in detail below. As shown in FIG. 2, in step S10, the center server 500 transmits a test start command, required to measure service quality, to the VoIP agent 100 or the circuit network agent 200. Such a test start command can be created according to a scenario previously set by the manager PC 600. The scenario may include the phone number of a counterpart agent, information about whether to perform one-way measurement or two-way measurement, the type of voice file to be reproduced, a measurement cycle, etc.

Next, in step S12, the VoIP agent 100, having received the start command, originates a call to the counterpart terminal equipment, that is, the circuit network agent 200. In this case, both the VoIP agent 100 and the circuit network agent 200 are allocated phone numbers corresponding to the trunk gateway 300 to be monitored, in advance as static numbers.

Next, in step S14, the center server 300 receives a CIC value, which is the channel ID of the trunk gateway 300 extracted from the trunk gateway 300 by the ISUP probe 700, from the ISUP probe 700, and stores the CIC value. At this time, the center server 500 also receives and stores a current time value, together with the CIC value, so as to realize temporal synchronization with the currently connected call. After the call has been connected in this way, the VoIP agent 100 reproduces a voice file, selected through the scenario, and transmits the reproduced voice file to the circuit network agent 200. Accordingly, the circuit network agent 200 determines whether a voice signal transmitted from the counterpart has been received in step S16, that is, analyzes the transmission/reception of RTP, and calculates an MOS value on the basis of the received voice signal if the voice signal is determined to have been received.

Next, in step S18, the circuit network agent 200 transmits both the results of RTP analysis and the MOS value to the center server 500. The center server 500 receives the RTP analysis results and the MOS value, stores them in its own database, and thereafter performs step S20, where the currently measured MOS value is compared to a preset threshold value. When the currently measured MOS value is equal to or greater than the threshold value, this case corresponds to the case where the service quality of the trunk gateway 300 to be monitored is excellent. Accordingly, the center server 500 proceeds to step S24, where both the CIC value and the MOS value are immediately stored in the database thereof. In contrast, when the currently measured MOS value is less than the preset threshold value, this case corresponds to the case where the service quality of the trunk gateway 300 to be monitored is bad. Accordingly, the center server 500 proceeds to step S22 where the center server notifies the manager PC 600 of the results of measurement, and thereafter performs step S24.

Meanwhile, when two-way measurement is selected according to the scenario (typically, two-way measurement is selected), the circuit network agent 200 transmits a voice file, selected through the scenario, to the VoIP agent 100 immediately after step S24 is terminated. Thereafter, the VoIP agent 100 performs steps S16 and S18, and the center server 500 performs steps S20 to S24 to correspond to steps S16 and S18, terminates the test for the currently connected call, and thereafter repeats the program when the subsequent program cycle returns.

The monitoring system and method for the trunk gateway according to the present invention are not limited to the above-described embodiments, but can be variously modified and implemented within the allowable range of the technical spirit of the present invention. For example, when service quality is measured, the ISUP probe may be omitted if only part of an arbitrary channel of the trunk gateway, having fallen into an operation-disabled state, is intended to be measured. Further, items other than a MOS value can be added as factors for evaluating service quality. Furthermore, the circuit network agent can originate a call to the VoIP agent. Meanwhile, the internal construction of the VoIP agent or the circuit network agent, MOS measurement scenarios, etc. are described in detail in the prior patents, which are disclosed in Korean Patent Application No. 10-2005-116362 (filed on December 1, 2005 and entitled "Remote Control Method for MOS Measurement Equipment"), and Korean Patent Application No. 10-2006-25262 (filed on March 20, 2006 and entitled "Remote Control Method for MOS Measurement Equipment"), which were filed by the present applicant, and thus a detailed description thereof is omitted.

As described above, the present invention provides a monitoring system and method for a trunk gateway, which can monitor the connection quality of each channel of the trunk gateway through the origination of continuous and periodic calls, so that monitoring results can be used as an index for comparing the quality of respective channels in a single trunk gateway, thus detecting a channel having deteriorated quality in advance, and utilizing the detection of the channel as the basis for providing excellent quality. Furthermore, when this process is implemented over all trunk gateways, the results of measurement can be used as data for comparing the quality of respective trunk gateways, as well as the quality of channels within a single trunk gateway.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. A monitoring system for a trunk gateway (300), the trunk gateway (300) being interposed between the Internet (10) and a Public Switched Telephone Network (20) and being adapted to packetize a trunk line into packets and to transmit the packets to the Internet (10), or to perform a reverse procedure, comprising:
a Voice over Internet Protocol agent (100) connected to the Internet (10) and adapted to originate and terminate a Voice over Internet Protocol call and to generate a Mean Opinion Score value using a voice file received from a counterpart agent;
a circuit network agent (200) connected to the Public Switched Telephone Network (20) and adapted to originate and terminate a call and to generate a Mean Opinion Score value using a voice file received from a counterpart agent;
a center server (500) for performing various types of control operations related to measurement of service quality of the trunk gateway (300), including establishment and termination of a call between the Voice over Internet Protocol agent (100) and the circuit network agent (200), and for collecting the Mean Opinion Score values generated by the Voice over Internet Protocol agent (100) and the circuit network agent (200);
a manager Personal Computer (600) for setting in the center server (500) a test scenario, required for measurement of service quality of the trunk gateway (300), and a threshold value, required for evaluation of the Mean Opinion Score values; and
an Integrated Services Digital Network User Part probe (700) for analyzing a packet on an Integrated Services Digital Network User Part node of the trunk gateway (300), extracting information about a channel of the trunk gateway (300) to which a current call is connected, and providing the extracted channel information to the center server (500).

2. The monitoring system according to claim 1, wherein the Voice over Internet Protocol agent (100) originates and terminates a Voice over Internet Protocol call using a Session Initiation Protocol and an H.323 protocol.

3. A monitoring method for a trunk gateway (300), the trunk gateway (300) being interposed between the Internet (10) and a Public Switched Telephone Network (20) and being adapted to packetize a trunk line into packets and to transmit the packets to the Internet (10), or to perform a reverse procedure, the method comprising the steps of:
originating and terminating, by a Voice over Internet Protocol agent (100) connected to the Internet (10), a Voice over Internet Protocol call and generating, by the Voice over Internet Protocol agent (100), a Mean Opinion Score value using a voice file received from a counterpart agent; and/or
originating and terminating, by a circuit network agent (200) connected to the Public Switched Telephone Network (20), a call and generating, by the circuit network agent (200), a Mean Opinion Score value using a voice file received from a counterpart agent; and
performing, by a center server (500), various types of control operations related to measurement of service quality of the trunk gateway (300), including establishment and termination of a call between the Voice over internet Protocol agent (100) and the circuit network agent (200), and for collecting the Mean Opinion Score values generated by the Voice over Internet Protocol agent (100) and/or the circuit network agent (200); and
setting, by a manager Personal Computer (600), in the center server (500) a test scenario, required for measurement of service quality of the trunk gateway (300), and a threshold value, required for evaluation of the Mean Opinion Score values; and
analyzing, by an Integrated Services Digital Network User Part probe (700), a packet on an Integrated Services Digital Network User Part node of the trunk gateway (300), extracting, by said Integrated Services Digital Network User Part probe (700), information about a channel of the trunk gateway (300) to which a current call is connected, and providing, by said Integrated Services Digital Network User Part probe (700), the extracted channel information to the center server (500).

4. The monitoring method according to claim 3, further comprising:
transmitting, by said center server (500), a test start command, required for measurement of service quality, to the Voice over Internet Protocol agent (100) or the circuit network agent (200) to originate a call to a counter part agent; and
comparing, by said center server (500), the received Mean Opinion Score value with the threshold value, thus determining whether service quality is excellent or bad.

5. The monitoring method according to claim 3 or 4, further comprising:
notifying a manager Personal Computer (600) of both the channel identification information and the Mean Opinion Score value if it is determined by the center server (500) that service quality is bad.

6. The monitoring method according to claim 4, wherein the test start command is created according to the test scenario, the test scenario including a phone number of a counterpart agent, information about whether to perform one-way measurement or two-way measurement, a type of voice file to be reproduced, or measurement cycle information.

## Patentansprüche

1. Überwachungssystem für ein Trunk-Gateway (300), wobei das Trunk-Gateway (300) zwischen dem Internet (10) und einem Festnetz (20) angeordnet ist und ausgelegt ist, eine Hauptleitung in Pakete zu packen und die Pakete an das Internet (10) zu übertragen oder eine umgekehrte Prozedur durchzuführen, wobei das Überwachungssystem aufweist:
einen Voice-over-Internet-Protokoll-Agenten (100), der mit dem Internet (10) verbunden ist und ausgelegt ist, einen Voice-over-Internet-Protokoll-Anruf zu initiieren und zu beenden und einen Mean-Opinion-Score-Wert unter Verwendung einer Sprachdatei, die von einem Gegenpart-Agenten empfangen wird, zu erzeugen;
einen Leitungsnetz-Agenten (200), der mit dem Festnetz (20) verbunden ist und ausgelegt ist, einen Anruf zu initiieren und beenden und einen Mean-Opinion-Score-Wert unter Verwendung einer Sprachdatei, die von einem Gegenpart-Agenten empfangen wird, zu erzeugen;
einen Zentrumsserver (500) zum Durchführen verschiedener Arten von Steuerungsbetrieben betreffend eine Messung einer Dienstqualität des Trunk-Gateways (300) einschließlich einer Errichtung und Beendigung eines Anrufes zwischen dem Voice-over-Internet-Protokoll-Agenten (100) und dem Leitungsnetz-Agenten (200), und zum Sammeln der Mean-Opinion-Score-Werte, die von dem Voice-over-Internet-Protokoll-Agenten (100) und dem Leitungsnetz-Agenten (200) gesammelt werden;
einen Verwaltungs-Personalcomputer (600) zum Einstellen eines Testszenarios in dem Zentrumsserver (500), das zur Messung der Dienstqualität des Trunk-Gateways (300) benötigt wird, und eines Schwellenwertes, der zur Auswertung der Mean-Opinion-Score-Werte benötigt wird; und
eine Integrated-Services-Digital-Network-User-Part-Probe (700) zum Analysieren eines Paketes an einem Integrated-Services-Digital-Network-User-Part-Knoten des Trunk-Gateways (300), Extrahieren von Informationen über einen Kanal des Trunk-Gateways (300), mit dem ein derzeitiger Anruf verbunden ist, und Bereitstellen der extrahierten Kanalinformationen für den Zentrumsserver (500).

2. Überwachungssystem nach Anspruch 1, wobei der Voice-over-Internet-Protokoll-Agent (100) einen Voice-over-Internet-Protokoll-Anruf unter Verwendung eines Session-Initiation-Protokolls und eines H.323-Protokolls initiiert und beendet.

3. Überwachungsverfahren für ein Trunk-Gateway (300), wobei das Trunk-Gateway (300) zwischen dem Internet (10) und einem Festnetz (20) angeordnet ist und ausgelegt ist, eine Hauptleitung in Pakete zu packen und die Pakete an das Internet (10) zu übertragen oder eine umgekehrte Prozedur durchzuführen, wobei das Verfahren die folgenden Schritte aufweist:
Initiieren und Beenden eines Voice-over-Internet-Protokoll-Anrufes durch einen Voice-over-Internet-Protokoll-Agenten (100), der mit dem Internet (10) verbunden ist, und Erzeugen eines Mean-Opinion-Score-Wertes mittels des Voice-over-Internet-Protokoll-Agenten (100) unter Verwendung einer Sprachdatei, die von einem Gegenpart-Agenten empfangen wird; und/oder
Initiieren und Beenden eines Anrufes mittels eines Leitungsnetz-Agenten (200), der mit dem Festnetz (20) verbunden ist, und Erzeugen eines Mean-Opinion-Score-Wertes mittels des Leitungsnetz-Agenten (200) unter Verwendung einer Sprachdatei, die von einem Gegenpart-Agenten empfangen wird; und
Durchführen von verschiedenen Arten von Steuerungsbetrieben betreffend eine Messung einer Dienstqualität des Trunk-Gateways (300) einschließlich einer Errichtung und Beendigung eines Anrufes zwischen dem Voice-over-Internet-Protokoll-Agenten (100) und dem Leitungsnetz-Agenten (200) mittels eines Zentrumsservers (500) und zum Sammeln der Mean-Opinion-Score-Werte, die von dem Voice-over-Internet-Protokoll-Agenten (100) und/oder dem Leitungsnetz-Agenten (200) erzeugt werden; und
Einstellen eines Testszenarios in dem Zentrumsserver (500) mittels eines Verwaltungs-Personalcomputers (600), das zur Messung der Dienstqualität des Trunk-Gateways (300) benötigt wird, und eines Schwellenwertes, der zur Auswertung der Mean-Opinion-Score-Werte benötigt wird; und
Analysieren eines Paketes an einem Integrated-Services-Digital-Network-User-Part-Knoten des Trunk-Gateways (300) mittels einer Integrated-Services-Digital-Network-User-Part-Probe (700), Extrahieren von Informationen über einen Kanal des Trunk-Gateways (300), mit dem ein derzeitiger Anruf verbunden ist, mittels der Integrated-Services-Digital-Network-User-Part-Probe (700) und Bereitstellen der extrahierten Kanalinformationen für den Zentrumsserver (500) mittels der Integrated-Services-Digital-Network-User-Part-Probe (700).

4. Überwachungsverfahren nach Anspruch 3, das außerdem aufweist:
Übertragen eines Teststartbefehls, der für die Messung der Dienstqualität benötigt wird, von dem Zentrumsserver (500) an den Voice-over-Internet-Protokoll-Agenten (100) oder den Leitungsnetz-Agenten (200), um einen Anruf zu einem Gegenpart-Agenten zu initiieren; und
Vergleichen des empfangenen Mean-Opinion-Score-Wertes mit dem Schwellenwert mittels des Zentrumsservers (500), womit bestimmt wird, ob die Dienstqualität ausgezeichnet oder schlecht ist.

5. Überwachungsverfahren nach Anspruch 3 oder 4, das außerdem aufweist:
Benachrichtigen eines Verwaltungs-Personalcomputers (600) über die Kanalidentifikationsinformationen und den Mean-Opinion-Score-Wert, wenn von dem Zentrumsserver (500) bestimmt wird, dass die Dienstqualität schlecht ist.

6. Überwachungsverfahren nach Anspruch 4, wobei der Teststartbefehl entsprechend dem Testszenario erzeugt wird, das Testszenario eine Telefonnummer eines Gegenpart-Agenten, Informationen darüber, ob eine Einwegemessung oder eine Zweiwegemessung durchzuführen ist, einen Typ einer zu reproduzierenden Sprachdatei oder Messzyklusinformationen enthält.

## Revendications

1. Système de surveillance pour une passerelle de jonction (300), la passerelle de jonction (300) étant interposée entre l'Internet (10) et un réseau téléphonique commuté public (20) et étant apte à paqueter une ligne de jonction en paquets et à transmettre les paquets à l'Internet (10), ou à effectuer une procédure inverse, comprenant :
un agent de voix sur protocole Internet (100) relié à l'Internet (10) et apte à établir et à terminer un appel de voix sur protocole Internet et à générer une valeur de note d'opinion moyenne en utilisant un fichier vocal reçu d'un agent homologue ;
un agent de réseau de circuit (200) relié au réseau téléphonique commuté public (20) et apte à établir et à terminer un appel et à générer une valeur de note d'opinion moyenne en utilisant un fichier vocal reçu d'un agent homologue ;
un serveur de centre (500) pour effectuer divers types d'opérations de commande relatives à une mesure de qualité de service de la passerelle de jonction (300), comprenant l'établissement et la terminaison d'un appel entre l'agent de voix sur protocole Internet (100) et l'agent de réseau de circuit (200), et pour collecter les valeurs de note d'opinion moyenne générées par l'agent de voix sur protocole Internet (100) et l'agent de réseau de circuit (200) ;
un ordinateur personnel de gestionnaire (600) pour régler dans le serveur de centre (500) un scénario de test, nécessaire pour une mesure de qualité de service de la passerelle de jonction (300), et une valeur de seuil, nécessaire pour une évaluation des valeurs de note d'opinion moyenne ; et
une sonde de partie utilisateur de réseau numérique à intégration de services (700) pour analyser un paquet sur un noeud de partie utilisateur de réseau numérique à intégration de services de la passerelle de jonction (300), pour extraire des informations au sujet d'un canal de la passerelle de jonction (300) auquel un appel en cours est connecté, et pour fournir les informations de canal extraites au serveur de centre (500).

2. Système de surveillance selon la revendication 1, dans lequel l'agent de voix sur protocole Internet (100) établit et termine un appel de voix sur protocole Internet en utilisant un protocole d'ouverture de session (SIP) et un protocole H.323.

3. Procédé de surveillance pour une passerelle de jonction (300), la passerelle de jonction (300) étant interposée entre l'Internet (10) et un réseau téléphonique commuté public (20) et étant apte à paqueter une ligne de jonction en paquets et à transmettre les paquets à l'Internet (10), ou à effectuer une procédure inverse, le procédé comprenant les étapes de :
l'établissement et la terminaison, par un agent de voix sur protocole Internet (100) relié à l'Internet (10), d'un appel de voix sur protocole Internet et la génération, par l'agent de voix sur protocole Internet (100), d'une valeur de note d'opinion moyenne en utilisant un fichier vocal reçu d'un agent homologue ; et/ou
l'établissement et la terminaison, par un agent de réseau de circuit (200) relié au réseau téléphonique commuté public (20), d'un appel et la génération, par l'agent de réseau de circuit (200), d'une valeur de note d'opinion moyenne en utilisant un fichier vocal reçu d'un agent homologue ; et
l'exécution, par un serveur de centre (500), de divers types d'opérations de commande relatives à une mesure de qualité de service de la passerelle de jonction (300), comprenant l'établissement et la terminaison d'un appel entre l'agent de voix sur protocole Internet (100) et l'agent de réseau de circuit (200), et la collecte des valeurs de note d'opinion moyenne générées par l'agent de voix sur protocole Internet (100) et/ou l'agent de réseau de circuit (200) ; et
le réglage, par un ordinateur personnel de gestionnaire (600), dans le serveur de centre (500), d'un scénario de test, nécessaire pour une mesure de qualité de service de la passerelle de jonction (300), et d'une valeur de seuil, nécessaire pour une évaluation des valeurs de note d'opinion moyenne ; et
l'analyse, par une sonde de partie utilisateur de réseau numérique à intégration de services (700), d'un paquet sur un noeud de partie utilisateur de réseau numérique à intégration de services de la passerelle de jonction (300), l'extraction, par ladite sonde de partie utilisateur de réseau numérique à intégration de services (700), d'informations au sujet d'un canal de la passerelle de jonction (300) auquel un appel en cours est connecté, et la fourniture, par ladite sonde de partie utilisateur de réseau numérique à intégration de services (700), des informations de canal extraites au serveur de centre (500).

4. Procédé de surveillance selon la revendication 3, comprenant en outre :
la transmission, par ledit serveur de centre (500), d'une commande de début de test, nécessaire pour une mesure de qualité de service, à l'agent de voix sur protocole Internet (100) ou à l'agent de réseau de circuit (200) pour établir un appel à un agent homologue ; et
la comparaison, par ledit serveur de centre (500), de la valeur de note d'opinion moyenne reçue à la valeur de seuil, en déterminant ainsi si une qualité de service est excellente ou mauvaise.

5. Procédé de surveillance selon la revendication 3 ou 4, comprenant en outre :
la notification à un ordinateur personnel de gestionnaire (600) des informations d'identification de canal et de la valeur de note d'opinion moyenne s'il est déterminé par le serveur de centre (500) que la qualité de service est mauvaise.

6. Procédé de surveillance selon la revendication 4, dans lequel la commande de début de test est créée en fonction du scénario de test, le scénario de test comprenant un numéro de téléphone d'un agent homologue, des informations indiquant s'il faut effectuer une mesure unidirectionnelle ou une mesure bidirectionnelle, un type de fichier vocal à reproduire ou des informations de cycle de mesure.
